# EUROPEAN PATENT APPLICATION

(11) **EP 1 707 335 A1**
(43) Date of publication of application: **04.10.2006**
(21) Application number: 05102518.7
(22) Date of filing: 30.03.2005
(51) Int. Cl.: B29C 44/58

(54) **Method for producing a cushioning pad**

(71) Applicant: IEE INTERNATIONAL ELECTRONICS & ENGINEERING S.A., 6468 Echternach (LU)
(72) Inventor: Larsen, Peter, 7270, Helmsange (LU); Thielen, Guido, 54675, Mettendorf (DE); Wampach, Manuel, 6115, Junglinster (LU); Damschen, Clemens, 8149, Bridel (LU)
(74) Representative: Beissel, Jean

(57) **Abstract**

A method for producing a cushioning pad with a tunnel conduit (18) under a surface of the cushioning pad (12) comprises the steps providing a mould for foaming the cushioning pad, providing an insert (30) comprising a uniformly bowed strip (32) representing a negative of the conduit, arranging the insert in the mould, so that end portions (36,38) of the bowed strip (32) are in contact with a forming surface (52) of the mould (50), injecting foam material into the mould (50), removing the cushioning pad from the mould, applying a force at an end portion of the bowed strip (32) causing movement of the insert through the conduit (18) and removing the insert (30).

## Description

The present invention generally relates to manufacturing of foamed cushioning pads provided with conduits underneath the surface of the cushioning pad e.g. for accommodating electric cables or parts of sensor mats.

### Background of the Invention

Cushioning pads are produced by foaming of a foam material in a mould, the forming surface of which determines the shape of the cushioning pad. After foaming, the cushioning pad is removed from the mould and can be further processed, e.g. upholstered with a covering.

Depending on later use, the cushioning pad may be equipped with conduits underneath its surface which are capable of accommodating e.g. electric cables or wires, strips wearing conductive lines, fluid-conducting tubes, etc. Presently such conduits are created after the foaming process by cutting. Several cutting techniques have been developed involving hot-knives or ultrasonic knives.

Cutting of tunnel conduits between two tunnel end points on a generally flat surface is usually done by moving obliquely with respect to the surface from the first tunnel end point in direction of the second tunnel end point. Similarly, another oblique cut is performed starting at the second tunnel end point. This technique results in a channel composed by two straight oblique parts meeting in an intermediate region under the surface between the two points. The longitudinal section of the conduit thus has the shape of a V. Depending on the cutting angle, this technique creates abrupt edges at the tunnel end points and in the middle portion. Consequently, an inelastic line or tube passing through this tunnel conduit is subject to buckling when the cushioning pad repeatedly elastically contracts and recovers under the impact of an external load. Such buckling may possibly lead to damage or breakage of the line or tube embedded in the tunnel conduit.

Cushioning pads are e.g. used in the production of vehicle seats. It is well known that vehicle seats can be equipped with different electronic devices requiring the presence of conductive lines in the seat cushion. Such electronic devices can be heating elements or occupancy sensors. The conductive lines may be embedded between the seat covering and the cushioning pad or inside the cushioning pad. As cushioning pad used for vehicle seats usually comprise one or more grooves used as crimping channels for attaching a covering, a passage under the groove has to be provided where conductive lines cross the grooves.

### Object of the Invention

It is an object of the present invention to provide an improved method for producing a cushioning pad equipped with tunnel conduits.

### General description of the Invention

The object of the invention is achieved by a method for producing a cushioning pad with a tunnel conduit under a surface of the cushioning pad according to claim 1. The method comprises the steps of:
providing a mould for foaming the cushioning pad;
providing an insert comprising a uniformly bowed strip representing a negative of the conduit;
arranging the insert in the mould, so that end portions of the bowed strip are in contact with a forming surface of the mould;
injecting foam material into the mould;
removing the cushioning pad from the mould and
applying a force at an end portion of the bowed strip causing movement of
the insert through the conduit and removing the insert.

The method proposes to use at least one removable insert for forming a tunnel conduit joining two surface points of the cushioning pad. The insert, which is a negative of the tunnel conduit to be formed, is positioned in the mould prior to foaming. The end portions touch the forming surface of the mould at the points where the tunnel conduit comes to the surface of the cushioning pad. After the actual foaming process, the cushioning pad is removed from the mould, while the insert remains embedded in the foam body of the cushioning pad.

The insert comprises a uniformly bowed strip and has a cross section such that it can be removed without damaging the cured foam. If subject to a pushing or pulling force at an end portion, the insert slides through the tunnel conduit and can be removed from the cushioning pad. After removal, the insert may be reused.

It will be appreciated that no cutting of tunnel conduits into the cushioning pad is required by the method, which results in a simplified production process. In addition, tunnel conduits formed by an insert benefit of a better contour quality than cut channels. While cutting of channels is usually results in a V-shaped longitudinal conduit section, the present technique provides a tunnel conduit with a constantly curved middle portion. The longitudinal section of a tunnel conduit has the shape of a circular arc. The smooth curvature can reduce the risk of buckling of the line or tube arranged in the cushioning pad during elastic contraction or relaxation of the cushioning pad under an external load.

Preferably, the insert comprises a web fixed to the concave surface of the strip, the web extending to the associated forming surface of the mould between the end portions of the bowed strip when the insert is arranged in the mould. The conduit formed by the insert hence comprises a slit extending from the tunnel base, formed by the bowed strip, to the surface of the cushioning pad. The insert and hence the conduit may e.g. have a T- or L-shaped cross section. Such a slit extending to the foam surface constitutes an advantage, if e.g. a closed-loop wire, ribbon, or strip is to be placed into the conduit. The foam material located above the tunnel base can be moved to the side during positioning.

The method proves very useful, if the mould comprises a ridge for forming a groove on the surface of the cushioning pad. The insert can be arranged in the mould so as to bridge the ridge. In the cushioning pad, the resulting tunnel conduit thus passes under the groove.

In order to obtain smooth edges between the surface of the cushioning pad and the tunnel conduit at the tunnel end points, the mould may comprise noses protruding from the forming surface associated with the end portions of the insert so as to enable smooth transitions between the bowed strip and the forming surface. This measure allows to further reduce the risk of buckling of an embedded line or tube especially at the tunnel end points. It will be appreciated that the noses can comprise fixing means for fixing the insert to the mould, which maintain the insert in its position during the foaming. In addition, such noses form positioning indexes, which prohibit incorrect placement of the insert.

It shall be noted that the noses can be removably clipped to the insert. In this case, after taking the cushioning pad out of the mould, the noses can be removed from the insert and the insert pushed or pulled through the tunnel conduit.

Preferably, the insert surface comprises a material having little or no adhesion with the foam, rendering the step of removing the insert particularly easy. The material having little adhesion with the foam may be a permanent coating of the reusable insert. Additionally or alternatively, said material can comprise a temporary coating, which is applied each time before a foaming process.

The invention furthermore concerns a method for manufacturing a sensor-equipped seat cushion, e.g. for a vehicle seat, using a cushioning pad obtained by the above process, wherein a sensor having a strip is associated with the cushioning pad and wherein the strip is inserted into the tunnel conduit. The sensor may e.g., be a foil-type pressure sensor used for detecting an occupant on the seat cushion, into which the cushioning pad is integrated, Such foil-type pressure sensors are used by the automotive industry for detecting whether a passenger airbag is to be deployed in case of a collision. These sensors may comprise a plurality of interconnected flexible strips, which are operationally arranged on the cushioning pad. Under certain circumstances, it is recommendable to locally bury the flexible strips inside the cushioning pad, for instance at crossings with a crimping channel or other components of a seat e.g. heating wires. The smoothly curved tunnel conduits obtained by removable inserts are well suited for receiving the strips of a foil-type sensor.

### Detailed description with respect to the figures

The invention will be more apparent from the following detailed description with reference to the accompanying drawings wherein:
Fig. 1: is a perspective view of a crossing of a sensor-mat strip and a groove in a seat cushion;
Fig. 2: is a cross sectional view of the crossing of Fig. 1 along the line A-A;
Fig. 3: is a schematic of a first embodiment of an insert;
Fig. 4: is a schematic of a second embodiment of an insert;
Fig. 5: is an illustration of different ways to use removable inserts in a mould.

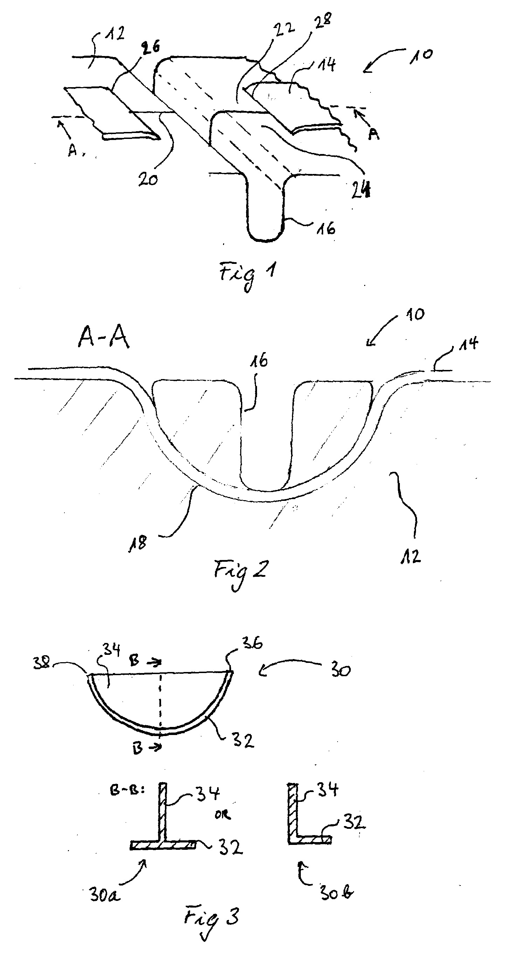

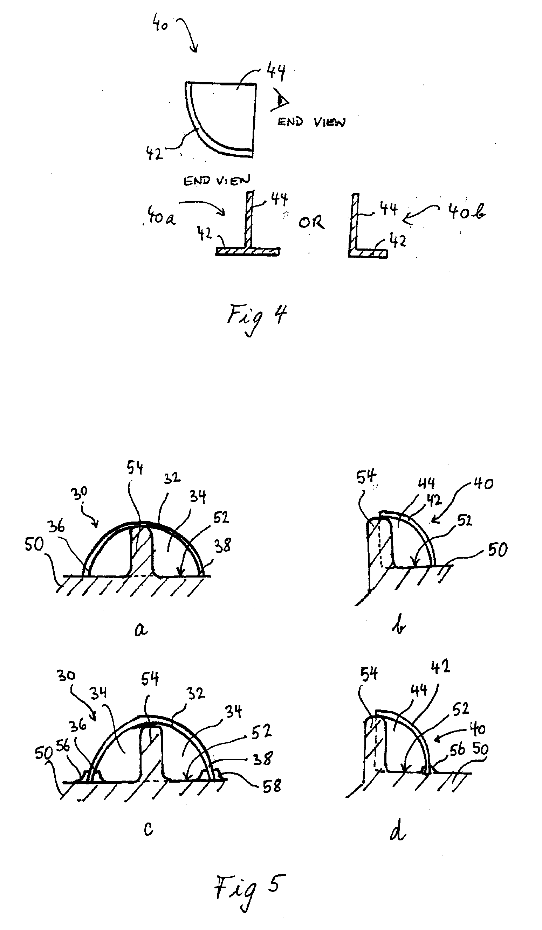

Referring to Fig. 1 and Fig. 2, a sensor-equipped seat cushion 10 comprises a cushioning pad 12 made of foam material, e.g. polyurethane foam, with its seating surface upholstered with a seat covering (not shown). The seat cushion 10 is equipped with a foil-type sensor mat with flexible but inelastic strips 14 wearing conductive lines and connecting the active areas of the sensor mat. The cushioning pad 12 has a plurality of U-shaped grooves 16 used for crimping the seat covering to the cushioning pad so as to achieve a designed appearance of the seat cushion 10. The strips 14 of the sensor mat are generally embedded between the cushioning pad and the seat covering except in regions where the strips 14 cross a crimping channel formed by a groove 16. The strips 14 pass underneath the grooves 16 by passing through a tunnel conduit, which has been formed by an insert during the process of foaming the cushioning pad 12.

The conduit comprises a first longitudinally U-shaped part 18 joining the tunnel end points 26, 28 situated on either side of the groove 16. In direction transversal to the tunnel conduit, the U-shaped part has a suitable breadth for accommodating the flexible strips 14. The conduit also comprises a second part, formed essentially by slit 20, which extends from the surface of the cushioning pad 12 to the U-shaped part 18. In the embodiment shown in Fig. 1, the slit 20 is located in the middle, with respect to the breadth, of the U-shaped portion 18. The strip 14 is hence maintained in position by symmetrical lobes 22, 24, which cover the strip 14 in the crossing region. The tunnel conduit accordingly has a T-shaped cross section. The lobes 22, 24 retain the flexible strip in position in the tunnel conduit.

The slit 20 can be enlarged by laterally compressing the lobes 22, 24 for likewise placing the strip 14 into the U-shaped part 18 of the conduit or removing the strip 14 therefrom.

As illustrated in Fig. 2, radii of curvature are generally chosen so as to smoothly bend the strip 14 in the crossing region, which minimises the risk of buckling and deterioration of the sensor mat.

Fig. 3 shows two alternatives of removable insert 30 usable as a negative of a tunnel conduit. The insert 30 comprises a uniformly bowed strip 32 corresponding to the U-shaped part 18 of the tunnel conduit. Although the shown bowed strip 32 has a flat rectangular cross section, other shapes can indeed be envisaged, e.g. elliptical shapes. The shown bowed strip 32 is essentially a rectangular cut-out of a cylinder jacket, the cylinder axis corresponding to the axis of curvature of the bowed strip 32. The insert 30 further comprises a web 34 essentially orthogonal to the axis of curvature of the bowed strip. The web 34 generally extends into the inner region of the U and causes the forming of the slit 20 during foaming of the cushioning pad. Two possible cross-sectional cuts are shown in Fig. 3: one having the shape of a T 30a due to central arrangement of the web 34 with respect to the breadth of the bowed strip 32 and a second having the shape of an L 30b, due to positioning of the web 34 along a longitudinal sideline of the bowed strip 32.

The shape of the insert 30 is such that it can be removed from the foamed cushioning pad without damaging the foam material. Prior to foaming, the insert 30 is positioned in the mould with the end portions 36, 38 and the web 34 being in contact with the forming surface of the mould. After foaming, the cushioning pad 12 is removed from the mould, while the insert 30 is embedded in the cushioning pad 12. By pushing one end portion 36, 38, a sliding movement of the insert 30 through the conduit is provoked and the insert 30 can be removed from the cushioning pad 12.

As in the present example the uniformly bowed strip 32 has uniform breadth along the tunnel conduit, sliding movement can be provoked be pushing either end portion 36, 38. The bowed strip 32 may however have a more general shape e.g. a curved trapezoid. If the dimensions of the bowed strip increase along the arc of circle described by the bowed strip, it is possible to withdraw the insert from the cushioning pad by that end portion which has the larger dimensions.

Fig. 4 shows an alternative embodiment of an insert 40, which has been designed for being placed into an edge of the mould during foaming. The insert 40 comprises a uniformly bowed strip 42 having the shape of a quarter of a circular cylinder jacket, the cylinder axis corresponding to the axis of curvature of the bowed strip 42. The insert 40 further comprises a web 44 essentially orthogonal to the axis of curvature of the bowed strip 42. If positioned in the mould, the web 44 extends from the bowed strip 42 to the associated surface of the mould and causes the forming of a slit during foaming of the cushioning pad. Fig. 4 further shows two possible cross-sectional cuts: one having the shape of a reversed T 40a, due to central arrangement of the web 44 with respect to the breadth of the bowed strip 42 and a second having the shape of an L 40b, due to positioning of the web 44 along a longitudinal sideline of the bowed strip 42.

Fig. 5 illustrates four different possibilities of placing an insert 30, 40 onto the forming surface 52 of a mould 50. The mould 50 comprises a ridge 54 constituting the negative of a groove to be formed on the surface of the cushioning pad. Typically, such a groove is used to crimp the seat covering to the cushioning pad.

In Fig. 5a and Fig. 5c, the forming surface 52 extends to both sides of the ridge 54. The insert 30 bridges the ridge 54 and the end portions 36, 38 join the flat parts of the forming surface 52 on both sides of the ridge 54. The web 34, which extends between the bowed strip 32 and the forming surface 52 is arranged transversally with respect to the ridge 54. The web 34 can have a recess for accommodating the contour of the ridge 54. Alternatively, the ridge 54 can have a recess for accommodating the web 34. As shown in Fig. 5c, the mould 50 can be equipped with noses 56, 58 protruding from the forming surface 52. The noses 56, 58 are shaped so as to enable a smoother transition from the forming surface 52 to the bowed strip 32 and thus smooth the edges formed at the tunnel end points of the cushioning pad. Furthermore, the noses 56, 58 can comprise a fixing mechanism for keeping the insert 30 securely in place, especially during the foaming process. The end portions 36, 38 can e.g. be cramped in the noses 56, 58. The fixing strength is chosen such that the fixation can withstand forces occurring during foaming but the cushioning pad with the embedded insert can be removed easily from the mould.

Fig. 5b and Fig. 5d show situations, where the insert 40 extends only to one side of the ridge 54. The bowed strip 42 joins the flat portion of the forming surface 52 and the top of the ridge 54. The web 44 adjoins the forming surface 52, the ridge 54 and the bowed strip 42. To the side of the ridge 54, the web 44 can be shaped so as to accommodate the contour of the ridge 54. Alternatively, the ridge 54 can have a recess for accommodating the web 44. In Fig. 5d, the insert 40 is maintained in position by means of a nose 56 protruding from the forming surface 52.

## Claims

1. A method for producing a cushioning pad with a tunnel conduit under a surface of said cushioning pad comprising the steps of:
providing a mould for foaming said cushioning pad;
providing an insert comprising a uniformly bowed strip representing a negative of said conduit;
arranging said insert in said mould, so that end portions of said bowed strip are in contact with a forming surface of said mould;
injecting foam material into said mould;
removing said cushioning pad from said mould and
applying a force at an end portion of said bowed strip causing movement of said insert through said conduit and removing said insert.

2. Method according to claim 1, wherein said insert comprises a web fixed to the concave surface of said strip, said web extending to said forming surface of the mould between said end portions of the bowed strip when the insert is arranged in the mould.

3. Method according to claim 2, wherein said cross section is T-shaped or L-shaped.

4. Method according to any one of claims 1 to 3, wherein said mould comprises a ridge for forming a groove on the surface of said cushioning pad and said insert is arranged in said mould so as to bridge said ridge.

5. Method according to any one of claims 1 to 4, wherein said mould comprises noses protruding from said forming surface associated with said end portions so as to enable smooth transitions between said bowed strip and said forming surface when the insert is arranged in the mould

6. Method according to claim 5, wherein said noses comprise fixing means for fixing said insert to said mould.

7. Method according to any one of claims 1 to 6, wherein the insert surface comprises a material having little adhesion with the foam.

8. Method for manufacturing a sensor-equipped seat cushion, comprising the steps of
producing a cushioning pad by a method according to any one of claims 1 to 7;
providing a sensor with a strip;
inserting said strip into said conduit.
